# EUROPÄISCHE PATENTSCHRIFT

(11) **EP 0 747 214 B1**
(45) Veröffentlichungstag und Bekanntmachung des Hinweises auf die Patenterteilung: **30.09.1998**
(21) Anmeldenummer: 96107753.4
(22) Anmeldetag: 15.05.1996
(51) Int. Cl.: B41F 13/004, B41F 33/12

(54) **Verfahren zum Steuern eines Mehrmotorenantriebs einer Druckmaschine sowie entsprechende Steuerung**
Method and device for controlling a multiple engine drive for a printing machine
Méthode et dispositif de commande de plusieurs moteurs d'entraînement d'une machine à imprimer

(30) Priorität: 09.06.1995 DE 19520642
(43) Veröffentlichungstag der Anmeldung: 11.12.1996
(73) Patentinhaber: MAN Roland Druckmaschinen AG, 63075 Offenbach (DE)
(72) Erfinder: Blumör, Joachim, 63512 Hainburg (DE); Völz, Albrecht, 63322 Rödermark (DE); Wiese, Holger, Dr., 63179 Obertshausen (DE)
(74) Vertreter: Stahl, Dietmar

(56) Entgegenhaltungen:
- DE-A- 3 614 979
- DE-A- 4 202 722
- DE-A- 4 322 744

## Beschreibung

Die Erfindung betrifft ein Verfahren zur Steuerung eines Mehrmotorenantriebes einer Druckmaschine sowie entsprechend ausgebildete Steuerung gemäß dem Oberbegriff des Verfahrens- bzw. Vorrichtungsanspruches.

Bei Bogenoffsetdruckmaschinen ist es bekannt und verbreitete Praxis, daß diese von einem Gleichstrommotor über einen durchgehenden Getriebezug angetrieben werden. Insbesondere wegen der einzelnen Kanalabrollung zwischen Platten- und Gummituch sowie Gummituch-und Gegendruckzylinder entstehen Torsionsschwingungen in dem elastisch verformbaren Getriebezug, was zu Druckschwierigkeiten führt. Auch ist es bekannt neben dem durchgehenden Getriebezug zusätzlich eine Längswelle vorzusehen und die über die Längswelle fließende Leistung über ein oder mehrere Getriebe in den Räderzug einzuspeisen. Dies ergibt zwar eine Versteifung des Getriebesystems, bedingt aber gleichzeitig einen hohen mechanischen Bauaufwand. Auch sind Lösungen bekannt geworden, bei welchen mehrere elektrisch geregelte Antriebe Leistung in einen durchgehenden Räderzug einspeisen. Auch diese Lösungen bedingen den hohen Bauaufwand hinsichtlich des durchgehenden Räderzuges und vermögen auch nur bedingt die nach wie vor auftretenden Torsionsschwingungen zu dämpfen.

Aus der DE 4 322 744 A1 ist ein elektrisches Antriebssystem für eine Druckmaschine bekannt, bei welchem insbesondere vorgesehen ist, die Zylinder mit jeweils einem Motor zu versehen und über eine entsprechende Steuerung drehwinkelsynchron anzutreiben. Dazu sind an den Zylindern direkt Winkellagegeber angeordnet, deren Signale von einer gemeinsamen Steuerung zu entsprechendem drehwinkelsynchronem Lauf der einzelnen Zylinder zueinander ausgewertet werden. Gerade bei bogenverarbeitenden Druckmaschinen, insbesondere Bogen-Offsetdruckmaschinen muß aber gewährleistet sein, daß die Zylinder nicht über ein gerade noch vertretbares Maß relativ zueinander verdreht werden. Dies hat seinen Grund darin, daß bei einer bogenverarbeitenden Druckmaschine die Greifer bzw.

Greiferfinger des Gegendruckzylinders und der Umführtrommeln aus dem Teilkreis herausragen. Eine Verdrehung beispielsweise des Gegendruckzylinders relativ zum Gummituchzylinder über ein bestimmtes Maß hinaus würde eine Beschädigung der Greifer sowie der mit den Greifern in Kontakt kommenden Zylinderoberfläche ergeben.

Aus der DE 4 202 722 A1 ist eine Sicherheitseinrichtung für die Regelung oder Steuerung von Antriebseinheiten einer Druckmaschine bekannt, bei welcher die Zylinder einzelne Antriebe aufweisen. Um das zuvor beschriebene Problem bei bogenverarbeitenden Druckmaschinen zu lösen ist zwischen den mit Einzelantrieben versehenen Zylindern jeweils eine mechanische Kupplung vorgesehen, welche derartig ausgebildet so daß die Zylinder nicht über ein vorgegebenes Maß relativ gegeneinander verdreht werden könne. Im störungsfreien Regelfall weisen die entsprechenden Kupplungsteile keinen Kontakt miteinander auf, dies ist erst dann der Fall, wenn oben besagte und zu Zerstörung führende Relativverdrehung über ein vorgegebenes Maß hinaus vorliegt. Wie eine elektrische Verdrehsicherung für das geschilderte Problem aussehen kann, ist in dieser Schrift jedoch nicht beschrieben.

Aus der DE 4 137 979 A1 ist ein Antrieb für eine Druckmaschine mit mehreren Druckwerken bekannt, bei der die einzelnen Druckwerke oder Druckwerksgruppen mechanisch voneinander entkoppelt sind und jeder dieser Gruppen einen eigenen Antriebsmotor aufweist. Es ist eine Vorrichtung zur Winkelregelung vorgesehen, welche dazu ausgebildet ist, eine zulässige Drehwinkelabweichung der einzelnen Druckwerke bzw. Druckwerksgruppen derartig vorzugeben, so daß diese bei derjenigen Drehwinkelstellung, welche der Bogenübergabe entspricht, minimal ist. Mit diesem Antrieb soll die Passerqualität verbessert werden.

Aufgabe der vorliegenden Erfindung ist es somit ein Verfahren sowie eine entsprechende Steuerung gemäß dem Oberbegriff des Verfahrens- bzw. Vorrichtungsanspruches derartig zu erweitern, so daß eine Einfehler-Sicherheit bei Ausfall einer Komponente in einem Mehrmotorantriebssystem gegeben ist.

Gelöst wird diese Aufgabe durch die kennzeichnenden Merkmale des Verfahrens-bzw. Vorrichtungsanspruches. Weiterbildungen der Erfindung ergeben sich aus den jeweiligen Unteransprüchen.

Gemäß der Erfindung ist vorgesehen, daß bei Ausfall einer Komponente des Mehrmotoren-Antriebssystems, beispielsweise eines Lagegebers, eines Signalgebers für die Kommutierung, eines Umrichters und dgl., sämtliche Antriebe nach einer Zeitfunktion zum Stillstand heruntergefahren werden, wobei dieses Herunterfahren nach einer Zeitrampe bzw. Zeitfunktion erfolgt, welche von dem Antrieb mit defekter Komponente vorgegeben wird. Fällt beispielsweise ein hochauflösender Drehlagegeber in einer Antriebseinheit aus, so wird diese Antriebseinheit aufgrund des noch vorliegenden Signals eines Gebers für die Kommutierung des Elektromotors entsprechend einer vorgegebenen Zeitrampe heruntergefahren, wobei die übrigen, noch intakten Antriebseinheiten ebenfalls dieser Zeitfunktion folgend auf die Drehzahl Null heruntergefahren werden.

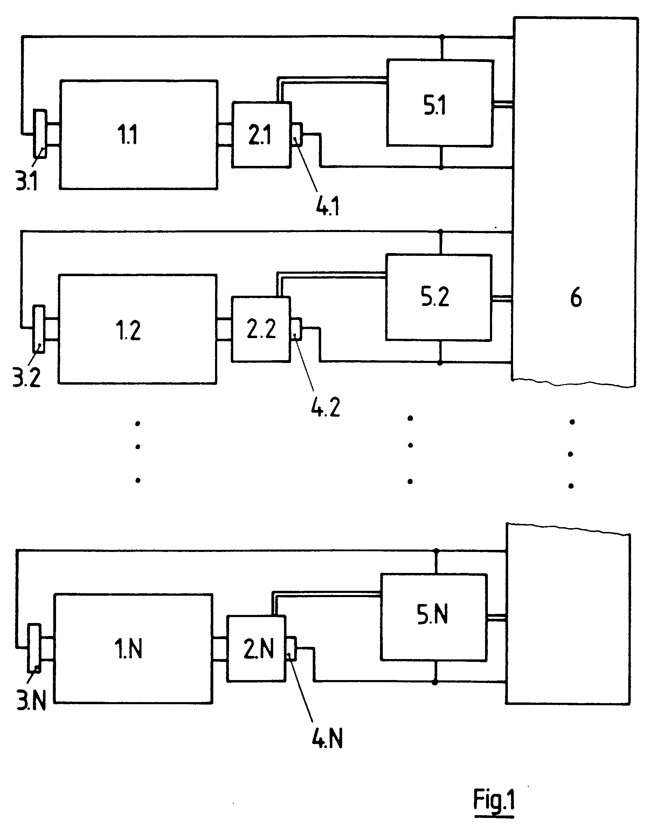

Des weiteren erfolgt die Erläuterung eines Ausführungsbeispiels der Erfindung anhand der einzigen Zeichnung. Gezeigt werden hier Einzelantriebe für jeweils einen Zylinder - allgemein als Achse zu bezeichnen - einer Druckmaschine. Die vorliegende Erfindung eignet sich jedoch nicht nur um einzelne Zylinder bzw. Achsen einer Druckmaschine einfehlersicher auf Gleichlauf zu steuern. Ebenfalls können auch einzelne Zylindergruppen jeweils einen eigenen Antrieb aufweisen und insgesamt voneinander mechanisch entkoppelt sein. Denkbar wäre hier insbesondere eine Konstellation, bei welcher jeder einzelne Druckeinheit, bestehend aus einem Gegendruckzylinder, einem Gummituch- und Plattenzylinder sowie einer Umführtrommel, über einen Räderzug miteinander gekoppelt sind und von einem gemäß der Erfindung ausgebildeten Antriebsmotor nebst übergeordneter Steuerung her getrieben werden. Statt Gleichstrommotoren sind auch Asynchronmotoren mit vorgeschalteter hochdynamischer Antriebssteuerung und Drehbewegungserfassung, insbesondere über gerechnetes Motormodell verwendbar.

Die einzelnen, mechanisch voneinander entkoppelten Zylinder 1.1 bis 1.N werden jeweils durch einen als Gleichstrommotor ausgebildeten Motor 2.1 bis 2.N angetrieben. Diese Gleichstrommotore 2.1 bis 2.N sind als sogenannte bürstenlose Gleichstrommotore ausgebildet. Auf der den Motoren 2.1 bis 2.N abgewandten und somit die Lastseite der Zylinder 1.1 bis 1.N darstellenden Seite ist jeweils ein hochauflösender Lagegeber 3.1 bis 3.N, der insbesondere als Ingrementalgeber ausgebildet ist, angebracht. Direkt mit den bürstenlosen Motoren 2.1 bis 2.N sind Signalgeber 4.1 bis 4.N angebracht, welche eine nicht so hohe Auslösung wie die Lagegeber 3.1 bis 3.N aufweisen und aus denen Signalinformation für die Kommutierung der Motoren 2.1 bis 2.N gewonnen werden.

Jedem Motor 2.1 bis 2.N nebst den Lagegebern 3.1 bis 3.N sowie den Signalgebern 4.1 bis 4.N ist eine Antriebssteuerung 5.1 bis 5.N zugeordnet, der die Signale der Lagegeber 3.1 bis 3.N sowie der der Kommutierung dienenden Signalgeber 4.1 bis 4.N zugeleitet werden und die jeweils über integrierte und nicht weiter dargestellte Umrichter die einzelnen Motoren 2.1 bis 2.N bestromen. Die einzelnen Antriebssteuerungen der Antriebseinheiten regeln dabei die Achsen der Motoren 2.1 bis 2.N derartig, so daß die Zylinder 2.1 bis 2.N bis auf ein vorgegebenes Tolleranzmaß drehwinkelsynchron zueinander laufen.

Die Antriebssteuerung 5.1 bis 5.N sowie die Signale der Lagegeber 3.1 bis 3.N sowie der der Kommutierung dienende Signalgeber 4.1 bis 4.N werden zusätzlich einer übergeordneten und als Leitrechner ausgebildeten Steuerung 6 zugeleitet, welche die noch weiter unten stehend genauer erläuterten Maßnahmen durchführt. Die Steuerung 6 steuert dabei über die einzelnen Antriebssteuerungen 5.1 bis 5.N die Lagen der Achsen der einzelnen Motoren 2.1 bis 2.N derart, daß die voranstehend erwähnte Synchronität hinsichtlich der Winkelstellung gegeben ist. Die Drehzahlregelung der einzelnen Motoren 2.1 bis 2.N wird diesem beschriebenen Hauptregelkreis unterlagert werden, wozu aus den Signalen der der Kommutierung dienenden Signalgeber 4.1 bis 4.N Drehzahlinformationen abgeleitet werden. Somit ist es möglich, daß die Zylinder 1.1 bis 1.N bei unterschiedlichen Drehzahlen stets winkelsynchron zueinander laufen.

Des weiteren erfolgt die Beschreibung von verschiedenen erfindungsgemäß vorgesehenen Maßnahmen, welche eingeleitet werden, wenn eine Komponente einer Antriebseinheit des voranstehend beschriebenen Antriebsystems ausfüllt. Die noch zu beschreibenden Maßnahmen werden dabei dadurch festgestellt und ausgeführt, indem wie bereits voranstehend erwähnt, die übergeordnete Steuerung 6 Signale sowohl der einzelnen Antriebssteuerungen 5.1 bis 5.N als auch der Lagegeber 3.1 bis 3.N sowie der der Kommutierung dienenden Signalgeber 4.1 bis 4.N einliest und hinsichtlich deren Vorhandensein und ferner auch auf Plausibilität überprüft. Die übergeordnete Steuerung 6 überprüft ferner auch ständig die Funktionsfähigkeit der einzelnen Antriebssteuerungen 5.1 bis 5.N nebst den entsprechend zugeordneten Umrichtern sowie insbesondere auch einen Spannungsausfall.

### Ausfallantriebssteuerung/Umrichter

In diesem Fall sei angenommen, daß die Antriebssteuerung 1.1 bzw. der entsprechende Umrichter einen Ausfall erleidet. In diesem Falle wird unmittelbar mit Feststellung dieses Ausfalles von der übergeordneten Steuerung 6 das Gebersignal des hochauflösenden Lagegebers 3.1 als Leitgröße für den weiteren Verfahrensablauf definiert. Durch den Ausfall der Antriebssteuerung 1.1 bzw. des entsprechenden Umrichters ist kein definiertes elektrisches Bremsen des Zylinders 1.1 über den Motor 2.1 mehr möglich. Dieser Ausfall kommt somit einem momentenfei Schalten des dem Zylinder 1.1 zugeordneten Antriebes gleich. Es werden nun die übrigen Motoren 2.2 bis 2.N über die zugeordneten Antriebssteuerungen 5.2 bis 5.N nach genau der Zeitfunktion heruntergefahren, welche durch den Lagegeber 3.1 der defekten Antriebseinheit festgestellt wird. Es erfolgt somit ein auslaufen lassen des Zylinders 1.1 nebst dem damit gekoppelten Motors 2.1, wobei die übrigen Zylinder 1.2 bis 1.N über die Motoren 2.2 bis 2.N ebenfalls drehwinkelsynchron heruntergefahren werden.

### Ausfall eines Motors

In diesem Beispiel sei angenommen, daß der Motor 2.1 des Zylinders 1.1 ausfällt. Auch in diesem Fall erfolgt, wie im voranstehend beschriebenen Beispiel des Ausfalls eines Antriebssteuerung bzw. eines Umrichters, das drehwinkelsynchrone Herunterfahren der Motoren 2.2 bis 2.N über die Antriebssteuerungen 5.2 bis 5.N, wobei die Signale des Lagegebers 3.1 des defekten Motors 2.1 von der übergeordneten Steuerung 6 als Leitwert herangezogen werden. Auch hier erfolgt somit ein Abtourvorgang der Motoren 2.2. bis 2.N, wobei diese von der übergeordneten Steuerung 6 sowie den zugeordneten Antriebssteuerungen 5.2 bis 5.N derartig bestromt werden, so daß die Winkelsynchronität zueinander erhalten bleibt.

### Ausfall Lagegeber

Es sei angenommen, daß der Lagegeber 3.1 des Zylinders 1.1 mit dem Motor 2.1 einen Ausfall erleidet. Dies wird von der übergeordneten Steuerung erkannt, woraufhin diese sofort das Signal des Signalgebers 4.1 für die Kommutierung des Motors 2.1 für das gezielte Herunterfahren des Motors 2.1 sowie der übrigen Motoren 2.2 bis 2.N als Sollwert heranzieht. Die der Kommutierung dienenden Signalgeber 4.1 bis 4.N weisen zwar eine geringere Genauigkeit als die hochauflösenden Lagegeber 3.1 bis 3.N auf, jedoch ist ein beschädigungsfreies Herunterfahren des Gesamtsystems noch möglich.

### Ausfall eines der Kommutierung dienenden Signalgebers

Hier sei angenommen, daß der der Kommutierung dienende Signalgeber 4.1 des Motors 2.1 ausfällt. Durch den Ausfall des Signalgebers 4.1 ist der Motor 2.1 nicht mehr definiert zu bestromen. D.h. es liegt ein Fehlerfall vor, der dem momentenfrei Schalten entspricht. Wie in dem Fall Ausfall Antriebssteuerung/Umrichter bzw. Ausfall Motor hier durch die übergeordnete Steuerung 6 die Signalwerte des Lagegebers 3.1 als Leitwert herangezogen und die übrigen Motoren 2.2 bis 2.N der Zylinder 1.2 bis 1.N in drehwinkelsynchroner Weise entsprechend dem Verhalten der Signale des Lagegebers 3.1 bis zum Stillstand heruntergefahren. Bei einem derartigen Ausfall kann erfindungsgemäß weiterbildend vorgesehen sein, daß aus den Lagesignalen des Lagegebers 3.1 der defekten Achse, Kommutierungssignale abgeleitet werden. Dies kann beispielsweise durch Zählen der Signale des Lagegebers 3.1 bis zu einem vorgegebenen Stand nebst nachfolgender Impulsbildung durchgeführt werden. Bei einer derartigen Ausführung wäre es darüberhinaus sogar möglich, auf das gezielte Herunterfahren des Gesamtsystems zu verzichten, wobei jedoch die Darstellung einer Fehlermeldung erfolgt.

### Ausfall der Spannungsversorgung

In diesem Falle sei angenommen, daß durch die übergeordnete Steuerung 6 durch hier nicht dargestellte Mittel der Ausfall der gesamten Spannungsversorgung festgestellt worden ist. Auch diese Situation erfordert das sofortige gezielte Herunterfahren des Gesamtsystems bis zum Stillstand. In diesem Falle wird die kinetische Energie des Gesamtsystems ausgenutzt, wobei das Stillsetzen auf zwei unterschiedliche Weisen realisiert werden kann.

In einer ersten Variante sei angenommen, daß die einzelnen Umrichter der Antriebssteuerung 5.1 bis 5.N über einen Gleichspannungszwischenkreis miteinander verbunden sind. Die Motoren 2.1 bis 2.N werden dabei an einer Rampe zum Stillstand heruntergefahren, wobei diese derartig bemessen ist, daß zu jedem Zeitpunkt durch die beim Bremsen rückgespeiste Energie noch die volle Gleichspannung zur Verfügung steht. In einfacher Weise kann dies dadurch bewirkt werden, daß eine möglichst steile Abtourrampe vorgegeben wird. Sind die Umrichter der einzelnen Antriebssteuerungen 5.1 bis 5.N nicht über einen Gleichspannungszwischenkreis miteinander verbunden, so bauen die Antriebe (Motoren 2.1 bis 2.N) die anfallende überschüssige Bremsenergie über jeweils in den einzelnen Zwischenkreisen angeordnete Brems-Schopper ab. In den beiden voranstehend beschriebenen Verfahrensweisen beim Herunterfahren des Gesamtsystems im Falle eines Ausfalls der Spannungsversorgung ist dabei ein ausreichend dimensionierter Puffer in Form von Kondensatoren bzw. Akkumulatoren im Zwischenkreis vorgesehen.

Die voranstehend beschriebenen erfindungsgemäßen Maßnahmen zum Herunterfahren eines aus mehreren Antriebseinheiten bestehenden Mehrmotorenantriebs einer Druckmaschine gewährleisten die Einfehlersicherbeit hinsichtlich des Ausfalls einer Komponente des Systems. Der gleichzeitige Ausfall von mehreren Komponenten eines Systems ist statistisch als überaus gering anzusehen. Um jedoch auch diesen immerhin denkbaren Fall hinsichtlich mechanischer Störungen vorzubeugen, kann, wie aus dem Stand der Technik bekannt, vorgesehen sein, daß zwischen den einzelnen in dem Ausführungsbeispiel als Zylinder 1.1 bis 1.N bezeichneten einzeln angetriebenen Achsen zusätzliche mechanische Mittel vorgesehen sind, durch welche entweder eine Verdrehung über ein vorgegebenes Maß hinaus verhindert oder das Eintreten der Beschädigung in sonstiger Weise verhindert wird.

### Bezugszeichenliste

- 1.1 bis 1.N: Zylinder (Achse)
- 2.1 bis 2.N: Motor (bürstenloser Gleichstrommotor)
- 3.1 bis 3.N: Lagegeber
- 4.1 bis 4.N: Signalgeber (Kommutierung)
- 5.1 bis 5.N: Antriebssteuerung
- 6: übergeordnete Steuerung

## Patentansprüche

1. Verfahren zum Steuern eines Mehrmotorenantriebes einer Druckmaschine, bestehend aus meheren Antriebseinheiten, welche über jeweils einen Motor einzeln und/oder gruppenweise Zylinder bzw. Achsen antreiben und wobei das winkelsynchrone Antreiben der einzelnen und/oder gruppenweise angetriebenen Zylinder bzw. Achsen durch die Auswertung von mit diesen Bauelementen verbundenen Lagegebern erfolgt,
**dadurch gekennzeichnet**,
daß bei Ausfall einer Komponente innerhalb einer Antriebseinheit sämtliche übrigen Antriebseinheiten winkelsynchron zum Stillstand beruntergefahren werden, wobei das Herunterfahren nach einer Zeitfunktion erfolgt, welche von der Antriebseinheit mit als Defekt festgestellter Komponente vorgegeben wird.

2. Verfahren nach Anspruch 1,
**dadurch gekennzeichnet**,
daß bei Ausfall einer einem Motor (2.1 - 2.N) zugeordneten Antriebssteuerung (5.1 - 5.N) bzw. zugeordneten Umrichters das Gebersignal des zugehörigen Zylinders (1.1 - 1.N) bzw. der zugehörigen Achse als Leitwert für das Herunterfahren der übrigen Antriebseinheiten herangezogen wird.

3. Verfahren nach Anspruch 1,
**dadurch gekennzeichnet**,
daß bei Ausfall eines Motors (2.1 - 2.N) einer Antriebseinheit das Gebersignal eines Lagegebers (3.1 - 3.N) dieser Antriebseinheit als Leitwert für das Herunterfahren zum Stillstand herangezogen wird.

4. Verfahren nach Anspruch 1,
**dadurch gekennzeichnet**,
daß bei Ausfall eines Lagegebers (3.1 - 3.N) einer Antriebseinheit die Signale der der Kommutierung dienenden Signalgeber (4.1 - 4.N) der als bürstenlos ausgebildeten Gleichstrommotoren (2.1 - 2.N) als Leitwert für das Herunterfahren bis zum Stillstand herangezogen werden.

5. Verfahren nach Anspruch 1,
**dadurch gekennzeichnet**,
daß bei Ausfall eines der Kommutierung dienenden Signalgebers (4.1 - 4.N) einer Antriebseinheit die Signale des Lagegebers (3.1 - 3.N) dieser Einheit als Leitwert für das Herunterfahren für die übrigen Antriebseinheiten herangezogen wird.

6. Verfahren nach Anspruch 5,
**dadurch gekennzeichnet**,
daß aus den Signalen des Lagegebers (3.1 - 3.N) der Antriebseinheit mit einem defekten und der Kommutierung dienenden Signalgebers (4.1 - 4.N) Signale für die Kommutierung abgeleitet werden.

7. Verfahren nach Anspruch 1,
**dadurch gekennzeichnet**,
daß bei Ausfall der Spannungsversorgung das Herunterfahren sämtlicher Antriebseinheiten bis zum Stillstand nach einer Ablauframpe erfolgt, wobei diese derartig bemessen ist, daß durch die beim Bremsen rückgespeiste Energie die volle Gleichspannung zur Verfügung stellt.

8. Steuerung zur Durchführung des Verfahrens nach einem der Ansprüche 1 bis 7, wobei einzelne und / oder gruppenweise mehrere Zylinder bzw. Achsen jeweils über Antriebseinheiten mit je einem Motor antreibbar sind und Lagegeber vorgesehen sind, deren Signale einer übergeordneten Steuerung zuführbar sind,
**dadurch gekennzeichnet**,
daß die übergeordnete Steuerung (6) dazu ausgebildet ist, Störungen von Komponenten in den einzelnen Antriebseinheiten festzustellen und daraufhin ein Herunterfahren der übrigen Antriebseinheiten bis zum Stillstand nach einer Zeitfunktion einzuleiten, wobei diese Zeitfunktion von der Antriebseinheit mit als Defekt festgestellter Komponente vorgebbar ist.

9. Steuerung nach Anspruch 8,
**dadurch gekennzeichnet**,
daß die Motoren (2.1 - 2.N) als bürstenlose Gleichstrommotoren ausgebildet sind und jeweils einen der Kommutierung dienenden Signalgeber (4.1 - 4.N) aufweisen.

10. Steuerung nach Anspruch 8 oder 9,
**dadurch gekennzeichnet**,
daß der übergeordneten Steuerung (6) neben den Signalen der den Zylindern (1.1 - 1.N) bzw. entsprechenden Achsen zugeordneten Lagegebern (3.1 - 3.N) zusätzlich die Signale der der Kommutierung dienenden Lagesignalgeber (4.1 - 4.N) zuführbar sind.

11. Steuerung nach Anspruch 8, 9 oder 10,
**dadurch gekennzeichnet**,
daß der übergeordneten Steuerung (6) zusätzlich Signale der den Motoren (2.1 bis 2.N) zugeordneten Antriebssteuerungen (5.1 - 5.N) zuführbar sind.

## Claims

1. Method for controlling a multiple motor drive of a printing press consisting of several drive units which via in each case a motor drive cylinders or axles individually and/or groupwise, and wherein the angularly synchronous drive of the cylinders or axles driven individually and/or in groups takes place by the evaluation of position sensors connected with these constructional elements, characterised in that on the failure of a component within a drive unit all of the other drive units are run dawn in angularly synchronised fashion to stationary, wherein the running down takes place in accordance with a time function which is determined by the drive unit with the component detected as having a defect.

2. Method according to Claim 1, characterised in that on the failure of a drive control (5.1 - 5.N) fitted to a motor (2.1 - 2.N) or convertor fitted thereto, the sensor signal of the respective cylinder (1.1 - 1.N) or of the corresponding axle is taken as a control value for the running down of the other drive units.

3. Method according to Claim 1, characterised in that on the failure of a motor (2.1 - 2.N) of a drive unit, the sensor signal of a position sensor (3.1 - 3.N) of this drive unit is taken as control value for running down to stationary.

4. Method according to Claim 1, characterised in that on the failure of a position sensor (3.1 - 3.N) of a drive unit, the signals of the signal sensors (4.1 - 4.N) serving for the commutation of the direct current motors (2.1 - 2.N) constructed brushless are taken as the control value for the running down to stationary.

5. Method according to Claim 1, characterised in that on the failure of a signal sensor (4.1 - 4.N) serving for commutation of a drive unit, the signals of the position sensor (3.1 - 3.N) of this unit are taken as control value for the running down for the remaining drive units.

6. Method according to Claim 5, characterised in that signals for the commutation are derived from the signals of the position sensor (3.1 - 3.N) of the drive unit with a signal sensor (4.1 - 4.N) serving for commutation which is defective.

7. Method according to Claim 1, characterised in that on the failure of the power supply, the running down of all of the drive units to stationary takes place in accordance with a running down ramp wherein this is dimensioned in such a fashion that the energy recovered on braking is available at the full DC voltage.

8. Control for carrying out the method according to one of Claims 1 to 7, wherein several cylinders or axles can be driven individually and/or grouped in each case respectively via drive units with a motor and position sensors are provided, the signals of which can be fed to an overall control, characterised in that the overall control (6) is constructed to detect damage to components in the individual drive units and then to introduce a running down of the remaining drive units to stationary in accordance with a time function, wherein this time function can be preset from the drive unit with the component found defective.

9. Control according to Claim 8, characterised in that the motors (2.1 - 2.N) are constructed as brushless direct current motors and have in each case a signal sensor (4.1 - 4.N) serving for commutation.

10. Control according to Claim 8 or 9, characterised in that there can be fed to the overall control (6) as well as the signals of the position sensors (3.1 - 3.N) arranged on the cylinders (1.1 - 1.N) or the corresponding axles, additionally the signals of the position signal sensors (4.1 - 4.N) serving for commutation.

11. Control according to Claim 8, 9 or 10, characterised in that there can be fed to the overall control (6) additional signals of the drive controls (5.1 - 5.N) fitted to the motors (2.1 to 2.N).

## Revendications

1. Procédé pour commander un mécanisme d'entraînement à plusieurs moteurs d'une machine d'impression, constitué de plusieurs unités d'entraînement qui entraînent par l'intermédiaire d'un moteur à chaque fois, individuellement et/ou par groupes, des cylindres ou axes, dans lequel l'entraînement, avec une synchronisation sur les angles de rotation, des cylindres ou axes entraînés individuellement ou par groupes s'effectue au moyen de l'évaluation de transmetteurs de positions reliés à ces éléments,
caractérisé en ce que, lors de la panne d'un élément dans une unité d'entraînement, on ralentit toutes les autres unités d'entraînement jusqu'à l'arrêt avec une synchronisation sur les angles en rotation, le ralentissement s'effectuant selon une fonction de temps qui est prescrite par l'unité d'entraînement ayant l'élément détecté comme étant en panne.

2. Procédé selon la revendication 1,
caractérisé en ce que, lors de la panne d'une commande d'entraînement (5.1 à 5.N) associé à un moteur (2.1 à 2.N), ou d'un convertisseur associé, on exploite le signal de transmetteur du cylindre associé (1.1 à 1.N) ou de l'axe associé comme valeur de référence pour le ralentissement des autres unités d'entraînement.

3. Procédé selon la revendication 1,
caractérisé en ce que, lors de la panne d'un moteur (2.1 à 2.N) d'une unité d'entraînement, on exploite le signal d'un transmetteur de position (3.1 à 3.N) de cette unité d'entraînement comme valeur de référence pour le ralentissement jusqu'à l'arrêt.

4. Procédé selon la revendication 1,
caractérisé en ce que, lors de la panne d'un transmetteur de position (3.1 à 3.N) d'une unité d'entraînement, on exploite les signaux des transmetteurs de signaux (4.1 à 4.N), servant à la commutation, des moteurs à courant continu (2.1 à 2.N), conçus sous forme de moteurs sans balai, comme valeur de référence pour le ralentissement jusqu'à l'arrêt.

5. Procédé selon la revendication 1,
caractérisé en ce que, lors de la panne d'un transmetteur de signal (4.1 à 4.N), servant à la commutation, d'une unité d'entraînement, on exploite les signaux du transmetteur de position (3.1 à 3.N) de cette unité comme valeur de référence pour le ralentissement des autres unités d'entraînement.

6. Procédé selon la revendication 5,
caractérisé en ce qu'on déduit des signaux de commutation à partir des signaux du transmetteur de position (3.1 à 3.N) de l'unité d'entraînement ayant un transmetteur de signal (4.1 à 4.N), servant à la commutation, en panne.

7. Procédé selon la revendication 1,
caractérisé en ce que, lors de la panne de l'alimentation en tension, le ralentissement jusqu'à l'arrêt de toutes les unités d'entraînement s'effectue selon une rampe d'arrêt qui est dimensionnée de telle sorte que la tension continue complète est disponible grâce à l'énergie introduite en retour lors du freinage.

8. Commande pour la mise en oeuvre du procédé selon l'une des revendications 1 à 7,
dans laquelle plusieurs cylindres ou axes peuvent être entraînés, individuellement ou par groupes, à chaque fois par l'intermédiaire d'unités d'entraînement avec un moteur à chaque fois et dans laquelle des transmetteurs de positions dont les signaux peuvent être envoyés à une commande supérieure sont prévus,
caractérisée en ce que la commande supérieure (6) est conçue pour détecter des pannes d'éléments dans les différentes unités d'entraînement et pour déclencher ensuite un ralentissement jusqu'à l'arrêt des autres unités d'entraînement selon une fonction de temps qui peut être prescrite par l'unité d'entraînement ayant l'élément détecté comme étant en panne.

9. Commande selon la revendication 8,
caractérisée en ce que les moteurs (2.1 à 2.N) sont conçus comme des moteurs à courant continu sans balai et comportent chacun un transmetteur de signal (4.1 à 4.N) servant à la commutation.

10. Commande selon la revendication 8 ou 9,
caractérisée en ce que la commande supérieure (6) peut recevoir, outre les signaux des transmetteurs de position (3.1 à 3.N) associés aux cylindres (1.1 à 1.N) ou à des axes correspondants, les signaux des transmetteurs de signaux (4.1 à 4.N) servant à la commutation.

11. Commande selon la revendication 8, 9 ou 10,
caractérisée en ce que la commande supérieure (6) peut recevoir en outre des signaux des commandes d'entraînement (5.1 à 5.N) associées aux moteurs (2.1 à 2.N).
